# EUROPÄISCHE PATENTSCHRIFT

(11) **EP 2 574 092 B1**
(45) Veröffentlichungstag und Bekanntmachung des Hinweises auf die Patenterteilung: **13.11.2013**
(21) Anmeldenummer: 11450123.2
(22) Anmeldetag: 21.09.2011
(51) Int. Cl.: H04W 16/14

(54) **Funkbake und Verfahren zur wahlweisen Kommunikation nach 5,8- und 5,9-GHz-DSRC-Standards**
Wireless beacon and method for selective communication according to 5.8 and 5.9-GHz DSRC standards
Capteur radio et procédé de communication sélective selon la norme DSRC 5,8 et 5,9 GHz

(43) Veröffentlichungstag der Anmeldung: 27.03.2013
(73) Patentinhaber: Kapsch TrafficCom AG, 1120 Wien (AT)
(72) Erfinder: Smely, Dieter, 2320 Schwechat (AT); Nagy, Oliver, 1190 Wien (AT)
(74) Vertreter: Weiser, Andreas

(56) Entgegenhaltungen:
- US-A1- 2004 223 467
- US-A1- 2005 197 680
- US-A1- 2006 189 309
- US-A1- 2007 063 872
- US-A1- 2007 171 887

## Beschreibung

Die vorliegende Erfindung betrifft eine Funkbake mit zumindest einem ersten Sendeempfänger zur Funkkommunikation mit ersten Fahrzeuggeräten nach 5,8-GHz-DSRC-Standards und mit zumindest einem zweiten Sendeempfänger zur Funkkommunikation mit zweiten Fahrzeuggeräten nach 5,9-GHz-DSRC-Standards. Die Erfindung betrifft ferner ein Verfahren zur wahlweisen Kommunikation zwischen einer solchen Funkbake und ersten und zweiten Fahrzeuggeräten.

Aus der US 2007/063872 A1 ist eine Funkbake mit mehreren Antennen zur Kommunikation mit Fahrzeuggeräten bekannt. Die Antennen werden nach einem zyklisch-sequentiellen Muster jeweils einzeln nacheinander im Zeit-Multiplex von mindestens einem Sendeempfänger angesteuert, um einen Lastausgleich für Antennen mit höherem Kommunikationsaufkommen zu schaffen. Dazu dient ein adaptives Zeitmultiplexmodul, das zum Ansteuern jeder einzelnen Antenne durch den bzw. die Sendeempfänger für jede Antenne jeweils ein bestimmtes Zeitfenster als zeitlich limitierte, exklusive Sendeberechtigung vergibt. Tritt an einer Antenne erhöhtes Kommunikationsaufkommen auf, so verlängert das Abtastmodul das zugehörige Sendeberechtigungs-Zeitfenster und verzögert alle nachfolgenden Zeitfenster oder erteilt der folgenden Antenne gar keine Sendeberechtigung. Bei diesem System wird nur jeweils eine der Antennen zur selben Zeit von dem mindestens einem Sendeempfänger angesteuert, was Störungen und Interferenzen in der Funkkommunikation systembedingt a priori ausschließt.

Funkbaken nach 5,8-GHz-DSRC-Standards werden in der Regel in Straßenmautsystemen verwendet, um Ortsnutzungen von Fahrzeugen, die mit Fahrzeuggeräten ("Onboard-Units", OBU) ausgestattet sind, anhand von Kurzreichweiten-Funkkommunikationen mit den Fahrzeuggeräten zu ermitteln und in der Folge zu vermauten. Hierzu sind Fahrzeuggeräte und Funkbaken nach 5,8-GHz-DSRC-Standards in breitem Einsatz, wie den Standards CEN EN 12253, ETSI EN 300 674, ETSI ES 200 674-1 und ETSI ES 200 674-2. Neuerdings werden in zunehmendem Maße jedoch auch Straßenmaut- und -kommunikationssysteme nach 5,9-GHz-DSRC-Standards eingesetzt, wie den Standards IEEE 802.11p ("WAVE"), ETSI ES 202 663, ETSI EN 302 571, ETSI EN 302 665 ("ITS-G5").

"Hybrid-Funkbaken" sollten sowohl mit Fahrzeugen, die mit 5,8-GHz-DSRC-OBUs ausgestattet sind, als auch mit Fahrzeugen, die 5, 9-GHz-DSRC-OBUs haben, kommunizieren können. Es hat sich jedoch gezeigt, dass trotz der unterschiedlichen Frequenzbänder aufgrund der engen Nachbarschaft der entsprechenden Sendeempfänger in der Funkbake und ihrer sich teilweise überlappenden Funkabdeckungsbereiche es zu gegenseitigen Störungen der Sendeempfänger und ihrer jeweiligen Funkkommunikationen mit den OBUs kommen kann. ETSI TR 102 654 beschreibt diese mögliche Interferenz der beiden Funksysteme.

Die Erfindung setzt sich zum Ziel, dieses Problem zu überwinden und eine Lösung für einen störungsunanfälligen Betrieb von 5,8- und 5,9-GHz-DSRC-OBUs mit einer Hybrid-Funkbake zu schaffen.

Dieses Ziel wird in einem ersten Aspekt der Erfindung mit einer Funkbake mit zumindest einem ersten Sendeempfänger zur Funkkommunikation mit ersten Fahrzeuggeräten nach 5,8-GHz-DSRC-Standards, gemäß welchen der erste Sendeempfänger eine Folge von ersten Datenpaketen in einem ersten Frequenzband sendet, und mit zumindest einem zweiten Sendeempfänger zur Funkkommunikation mit zweiten Fahrzeuggeräten nach 5,9-GHz-DSRC-Standards, gemäß welchen der zweite Sendeempfänger zumindest ein zweites Datenpaket in einem zweiten Frequenzband sendet oder empfängt, erreicht, welche Funkbake erfindungsgemäß dafür ausgebildet ist, das Aussenden eines Datenpakets der Folge von ersten Datenpaketen um die maximale Dauer eines zweiten Datenpakets zu verzögern, wenn ein zweites Datenpaket im zweiten Frequenzband auftritt.

Nach 5,8-GHz-DSRC-Standards sendet eine Bake als "erste Datenpakete" meist eine regelmäßige Folge von BST-Nachrichten (Beacon Service Table Messages) aus, um passierende OBUs zur Antwort anzuregen. Der zeitliche Abstand zwischen zwei Datenpaketen der Folge darf nicht so groß sein, dass die Gefahr besteht, dass eine OBU, welche den Funkabdeckungsbereich des 5,8-GHz-DSRC-Sendeempfängers der Bake schnell durchfährt, kein BST-Datenpaket erhält und damit keine Kommunikation mit der Bake aufnimmt. Bei einer üblichen Länge von 5 - 10 m des 5,8-GHz-DSRC-Funkabdeckungsbereichs der Bake und einer maximalen Fahrtgeschwindigkeit von ca. 200 km/h werden die Zeitabstände in der Folge von ersten Datenpaketen dazu z.B. auf 10 - 30 ms festgelegt. Die Erfindung beruht auf der Lösung, dass Datenpakete nach 5,9-GHz-DSRC-Standards jeweils nur geringe Dauer haben, z.B. max. 2 ms, so dass die periodisch zu wiederholenden 5,8-GHz-DSRC-Datenpakete um diese Dauer verzögert werden können, um Kollisionen zu vermeiden. Die Folge von 5,8-GHz-DSRC-Daten-paketen wird dadurch in der Art eines "Phasenjitters" geringfügig zeitlich variiert, was zu keiner Beeinträchtigung der 5,8-GHz-DSRC-Funktionalität führt, jedoch Störungen durch Interferenz bzw. Übersprechen zwischen den beiden Kommunikationsstandards 5,8- und 5,9-GHz-DSRC wirksam verhindert.

Gemäß einer ersten bevorzugten Variante der Erfindung überwacht der erste Sendeempfänger das zweite Frequenzband, um die genannte Verzögerung des Aussendens eines ersten Datenpakets zu bewirken, wenn er ein zweites Datenpakets im zweiten Frequenzband detektiert. Dies implementiert eine "listen-before-talk"-Funktion für den 5,8-GHz-DSRC-Sendeempfänger, d.h. dieser "hört" gleichsam in ein "fremdes" Frequenzband, das 5,9-GHz-Band, "hinein", bevor er im standardeigenen 5,8-GHz-DSRC-Band sendet. Alternativ kann der zweite Sendeempfänger direkt den ersten Sendeempfänger steuern, um die genannte Verzögerung des Aussendens eines ersten Datenpakets zu bewirken, wenn er ein zweites Datenpaket sendet oder empfängt.

Gemäß einer weiteren besonders vorteilhaften Ausführungsform der Erfindung kann auch der zweite Sendeempfänger das erste Frequenzband überwachen und nur dann ein zweites Datenpaket senden, wenn das erste Frequenzband frei ist. Das verleiht dem 5,9-GHz-DSRC-Sendeempfänger eine modifizierte "listen-before-talk"-Funktion, wonach auch dieser in das "fremde" 5,8-GHz-DSRC-Band "hineinhört", bevor er im standardeigenen Frequenzband sendet. Alternativ kann der erste Sendeempfänger auch direkt den zweiten Sendeempfänger am Aussenden eines zweiten Datenpakets hindern, wenn er ein erstes Datenpaket sendet oder empfängt.

In einem zweiten Aspekt schafft die Erfindung ein Verfahren zur wahlweisen Funkkommunikation zwischen einer Funkbake und ersten Fahrzeuggeräten nach 5,8-GHz-DSRC-Standards, gemäß welchen eine Folge von ersten Datenpaketen in einem ersten Frequenzband von der Funkbake ausgesendet wird, und zwischen derselben Funkbake und zweiten Fahrzeuggeräten nach 5,9-GHz-DSRC-Standards, gemäß welchen zumindest ein zweites Datenpaket in einem zweiten Frequenzband von der Funkbake gesendet oder empfangen wird, wobei sich das Verfahren erfindungsgemäß dadurch kennzeichnet, dass das Aussenden eines Datenpakets der Folge von ersten Datenpaketen um die maximale Dauer eines zweiten Datenpakets verzögert wird, wenn ein zweites Datenpaket im zweiten Frequenzband auftritt.

Hinsichtlich der Vorteile und weitere Merkmale des erfindungsgemäßen Verfahrens wird auf die obigen Ausführungen zur Funkbake verwiesen.

Die Erfindung wird nachstehend anhand eines in den beigeschlossenen Zeichnungen dargestellten Ausführungsbeispiels näher erläutert. In den Zeichnungen zeigt:
Fig. 1 eine Funkbake gemäß der Erfindung in schematischer Form; und
Fig. 2 ein Zeitdiagramm der Datenpaketsendungen der Funkbake von Fig. 1.

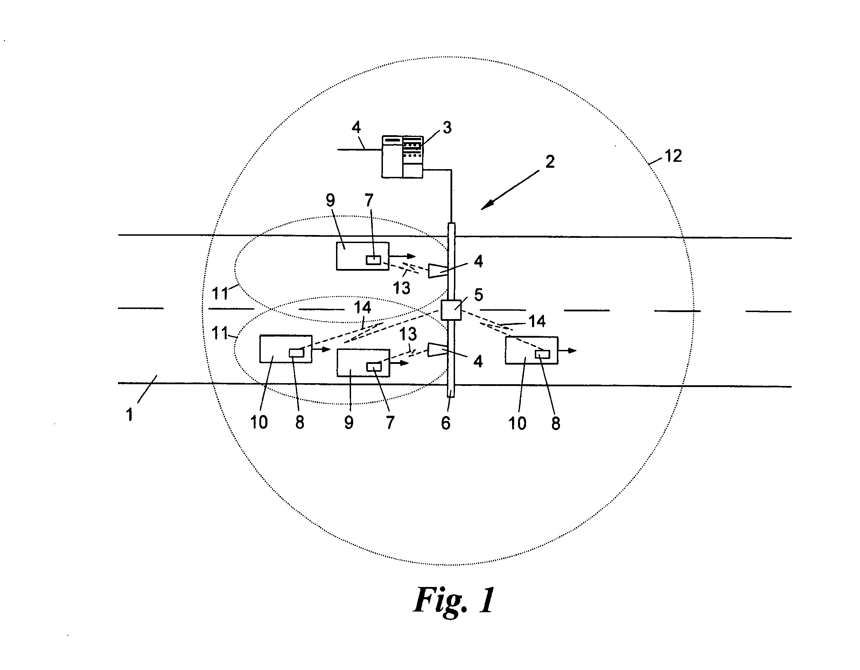

Fig. 1 zeigt ausschnittsweise eine Straße 1, an der eine Funkbake 2 eines (nicht weiter dargestellten) Straßenmaut- und/oder -kommunikationssystems angeordnet ist. Die Funkbake 2 wird auch als Roadside Unit (RSU) bezeichnet und umfasst einen lokalen Bakenrechner 3, der über eine Datenleitung 4 mit einer (nicht gezeigten) Zentrale des Straßenmaut- bzw. -kommunikationssystems in Verbindung steht, sowie mehrere Sendeempfänger 4, 5, welche beispielsweise an einer die Straße 1 überspannenden Montagebrücke 6 montiert sind.

Die Funkbake 2 ist eine "Hybrid-Bake" und kann mit zwei verschiedenen Arten von Fahrzeuggeräten bzw. OBUs 7, 8 funkkommunizieren, die von Fahrzeugen 9, 10 auf der Straße 1 mitgeführt werden. Die erste Art von OBUs sind 5,8-GHz-DSRC-OBUs 7 gemäß 5,8-GHz-DSRC-Standards, die mit einem (oder mehreren) hiefür dedizierten 5,8-GHz-DSRC-Sendeempfängern 4 der Funkbake 2 zusammenwirken. Die zweite Art von OBUs sind 5,9-GHz-DSRC-OBUs 8 gemäß 5,9-GHz-DSRC-Standards, welche mit zumindest einem hiefür dedizierten 5,9-GHz-DSRC-Sendeempfänger 5 der Funkbake 2 zusammenwirken.

In der vorliegenden Beschreibung werden unter der Bezeichnung "5,8-GHz-DSRC-Standards" alle im 5,8 GHz-Band arbeitenden DSRC- ("dedicated short range communication") -Standards verstanden, u.zw. sowohl "High Data Rate" (HDR)-, "Medium Data Rate" (MDR)- als auch "Low Data Rate" (LDR)-Varianten dieser Standards, einschließlich CEN EN 12253, ETSI EN 300 674, ETSI ES 200 674-1 und ETSI ES 200 674-2; und unter der Bezeichnung "5,9-GHz-DSRC-Standards" alle im 5,9 GHz-Band arbeitenden DSRC-Standards, einschließlich IEEE 802.11p ("WAVE"), ETSI ES 202 663, ETSI EN 302 571 und ETSI EN 302 665 ("ITS-G5").

Jeder der 5,8-GHz-DSRC-Sendeempfänger 4 der Funkbake 2 hat bevorzugt (wenn auch nicht zwingend) eine Antenne mit gerichteter Antennencharakteristik (Richtcharakteristik) mit einem eng begrenzten, z.B. auf eine Fahrspur der Straße 1 beschränkten Funkabdeckungsbereich 11. 5,9-GHz-DSRC-Sendeempfänger 5 haben hingegen bevorzugt (wenn auch nicht zwingend) eine Antenne mit Rundstrahlcharakteristik und einem größeren Funkabdeckungsbereich 12. Funkkommunikationen 13 zwischen Sendeempfängern 4 und OBUs 7 erfolgen im 5,8-GHz-Band ("ersten Frequenzband") nach 5,8-GHz-DSRC-Standards, Funkkommunikationen 14 zwischen Sendeempfängern 5 und OBUs 8 im 5,9-GHz-Band ("zweiten Frequenzband") nach 5,9-GHz-DSRC-Standards.

Aufgrund der engen örtlichen Nähe der Sendeempfänger 4, 5 und der teilweisen Überlappung ihrer Funkabdeckungsbereiche 11, 12 kann es trotz der unterschiedlichen Frequenzbänder der Funkkommunikationen 13, 14 zu gegenseitigen Interferenzen bzw. Störungen bzw. Datenpaketkollisionen zwischen den 5,8- und 5,9-GHz-Systemen der Funkbake 2 kommen, was wie folgt verhindert wird.

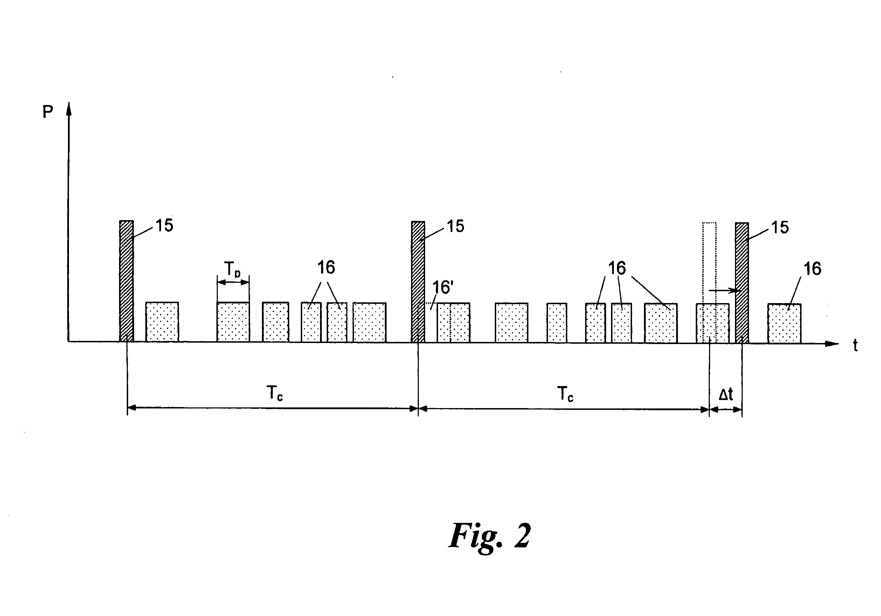

Fig. 2 zeigt eine Reihe von Datenpaketen 15, 16, versinnbildlicht jeweils durch ihre mittlere Signalleistung P über der Zeit t. 5,8-GHz-DSRC-Datenpakete 15 der Funkkommunikationen 13 sind schraffiert dargestellt, 5,9-GHz-DSRC- Datenpakete 16 der Funkkommunikationen 14 punktiert gezeichnet.

Nach den 5,8-GHz-DSRC-Standards wird innerhalb einer Zykluszeit T_{c} von der Funkbake 2 zumindest ein 5,8-GHz-DSRC-Datenpaket 15 ausgestrahlt. Dabei handelt es sich in der Regel um eine sog. BST-Nachricht (Beacon Service Table Message), welche einer den Funkabdeckungsbereich 11 passierende OBU 7 mitteilt, dass hier eine Funkbake 2 ist. 5,8-GHz-DSRC-OBUs 7 antworten daraufhin mit entsprechenden Datenpaketen (nicht dargestellt), woraus sich die Funkkommunikationen 13 entwickeln. Die Zykluszeit bzw. der Zeitabstand T_{c} wird entsprechend der Größe des Funkabdeckungsbereichs 11 und der maximal erwarteten Geschwindigkeit der Fahrzeuge 9 so gewählt, dass jede passierende OBU 7 zumindest ein Datenpaket 15 empfangen kann. Der Zeitabstand T_{c} beträgt bevorzugt 10 - 30 ms, besonders bevorzugt etwa 20 ms, für einen Funkabdeckungsbereich 11 mit einer durchfahrbaren Länge von ca. 5 - 10 m und einer Höchstgeschwindigkeit der Fahrzeuge 9 von 200 km/h.

Im Gegensatz zu 5,8-GHz-DSRC-Datenpaketen 15 sind 5,9-GHz-DSRC-Datenpakete 16 - auch wenn es in den 5,9-GHz-DSRC-Standards den 5,8-GHz-BST-Nachrichten entsprechende WSA-Nachrichten ("WAVE Service Announcements") gibt - nicht an einen maximalen Zeitabstand T_{c} gebunden, sondern können zu jedem beliebigen Zeitpunkt von den Sendeempfängern 5 oder OBUs 8 ausgesandt werden. 5,9-GHz-DSRC-Datenpakete 16 sind allerdings stets kurz und haben eine maximale Dauer T_{P} von z.B. 2 ms.

Um Störungen zwischen 5,8-GHz-DSRC-Datenpaketen 15 und 5,9-GHz-Datenpaketen 16 zu verhindern, wird die Aussendung eines 5,8-GHz-DSRC-Datenpakets 15 immer dann verzögert, wenn sie mit einem 5,9-GHz-DSRC-Datenpaket 16 zusammentreffen würde, u.zw. um eine Verzögerungszeit Δt, welche der maximalen Dauer Tₚ eines 5,9-GHz-DSRC-Datenpakets 16 entspricht. Das in Fig. 2 rechts dargestellte Datenpaket 15 der Folge wird somit in einem zeitlichen Abstand T_{c} + Δt zum vorhergehenden Datenpaket 15 ausgesandt. Das anschließende (nicht mehr dargestellte) Datenpaket 15 kann wieder im regulären Zeitabstand T_{c} folgen oder in einem reduzierten Zeitabstand T_{c} - Δt, um einen durchschnittlichen Zeitabstand T_{c} beizubehalten.

Umgekehrt kann auch die Aussendung eines 5,9-GHz-DSRC-Datenpakets 16 unterbunden werden, wenn es mit einem 5,8-GHz-DSRC-Datenpaket 15 zusammentreffen würde, siehe das punktiert gezeichnete "unterbundene" Datenpaket 16' in Fig. 2.

Um die genannte Verzögerung der Datenpakete 15 zu erreichen, kann entweder der 5,8-GHz-DSRC-Sendeempfänger 4 das 5,9-GHz-Frequenzband auf das Auftreten eines 5,9-GHz-DSRC-Datenpakets 16 überwachen, oder der 5,9-GHz-DSRC-Sendeempfänger 5 steuert direkt den 5,8-GHz-DSRC-Sendeempfänger 4 an, um dessen Datenpakete 15 zu verzögern, wenn er selbst ein Datenpaket 16 aussendet oder empfängt.

Umgekehrt kann der 5,9-GHz-DSRC-Sendeempfänger 5 entweder das 5,8-GHz-Frequenzband auf das Auftreten eines 5,8-GHz-DSRC-Datenpakets 15 überwachen und, wenn er ein solches detektiert, sein Datenpaket 16' aussetzen, oder der 5,8-GHz-DSRC-Sendeempfänger 4 steuert direkt den 5,9-GHz-DSRC-Sendeempfänger 4 an, um das Datenpaket 16' zu unterdrücken.

Aufgrund der begrenzten Länge Tp der 5,9-GHz-DSRC-Datenpakete 16 ist gewährleistet, dass die Verzögerung eines 5,8-GHz-DSRC-Datenpakets 15 stets nur höchstens um Δt = Tp erfolgt. Bei den vorgenannten beispielhaften Werten würden damit die alle T_{c} = 20 ms ausgesandten 5,8-GHz-DSRC-Datenpakete 15 im Einzelfall höchstens um 2 ms verzögert, was zu keiner Beeinträchtigung der 5,8-GHz-DSRC-Funktionalität der Funkbake 2 führt.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Funkbake mit zumindest einem ersten Sendeempfänger (4) zur Funkkommunikation (13) mit ersten Fahrzeuggeräten (7) nach 5,8-GHz-DSRC-Standards, gemäß welchen der erste Sendeempfänger (4) eine Folge von ersten Datenpaketen (15) in einem ersten Frequenzband sendet, und mit zumindest einem zweiten Sendeempfänger (5) zur Funkkommunikation (14) mit zweiten Fahrzeuggeräten (8) nach 5,9-GHz-DSRC-Standards, gemäß welchen der zweite Sendeempfänger (5) zumindest ein zweites Datenpaket (16) in einem zweiten Frequenzband sendet oder empfängt, **dadurch gekennzeichnet, dass** die Funkbake (2) dafür ausgebildet ist, das Aussenden eines Datenpakets (15) der Folge von ersten Datenpaketen (15) um die maximale Dauer (Tₚ) eines zweiten Datenpakets (16) zu verzögern, wenn ein zweites Datenpaket (16) im zweiten Frequenzband auftritt.

2. Funkbake nach Anspruch 1, **dadurch gekennzeichnet, dass** der Zeitabstand (T_{c}) zwischen zwei Datenpaketen (15) der ersten Folge etwa 10 - 30 ms und die genannte Dauer (Tp) eines zweiten Datenpakets (16) maximal 2 ms ist.

3. Funkbake nach Anspruch 1 oder 2, **dadurch gekennzeichnet, dass** der erste Sendeempfänger (4) das zweite Frequenzband überwacht, um die genannte Verzögerung (Δt) des Aussendens eines ersten Datenpakets (15) zu bewirken, wenn er ein zweites Datenpaket (16) im zweiten Frequenzband detektiert.

4. Funkbake nach Anspruch 1 oder 2, **dadurch gekennzeichnet, dass** der zweite Sendeempfänger (5) den ersten Sendeempfänger (4) steuert, um die genannte Verzögerung (Δt) des Aussendens eines ersten Datenpakets (15) zu bewirken, wenn er ein zweites Datenpaket (16) sendet oder empfängt.

5. Funkbake nach einem der Ansprüche 1 bis 4, **dadurch gekennzeichnet, dass** der zweite Sendeempfänger (5) das erste Frequenzband überwacht und nur dann ein zweites Datenpaket (16) sendet, wenn das erste Frequenzband frei ist.

6. Funkbake nach einem der Ansprüche 1 bis 4, **dadurch gekennzeichnet, dass** der erste Sendeempfänger (4) den zweiten Sendeempfänger (5) am Aussenden eines zweiten Datenpakets (16) hindert, wenn er ein erstes Datenpaket (15) sendet oder empfängt.

7. Funkbake nach einem der Ansprüche 1 bis 6, **dadurch gekennzeichnet, dass** der erste Sendeempfänger (4) eine Antenne mit Richtcharakteristik besitzt.

8. Verfahren zur wahlweisen Funkkommunikation zwischen einer Funkbake (2) und ersten Fahrzeuggeräten (7) nach 5,8-GHz-DSRC-Standards, gemäß welchen eine Folge von ersten Datenpaketen (15) in einem ersten Frequenzband von der Funkbake (2) ausgesendet wird, und zwischen derselben Funkbake (2) und zweiten Fahrzeuggeräten (8) nach 5,9-GHz-DSRC-Standards, gemäß welchem zumindest ein zweites Datenpaket (16) in einem zweiten Frequenzband von der Funkbake (2) gesendet oder empfangen wird, **dadurch gekennzeichnet, dass** das Aussenden eines Datenpakets (15) der Folge von ersten Datenpaketen (15) um die maximale Dauer (Tp) eines zweiten Datenpakets (16) verzögert wird, wenn ein zweites Datenpaket (16) im zweiten Frequenzband auftritt.

9. Verfahren nach Anspruch 8, **dadurch gekennzeichnet, dass** der Zeitabstand (T_{c}) zwischen zwei Datenpaketen (15) der ersten Folge etwa 10 - 30 ms und die genannte Dauer (Tp) eines zweiten Datenpakets (16) maximal 2 ms ist.

10. Verfahren nach Anspruch 8 oder 9, **dadurch gekennzeichnet, dass** nur dann ein zweites Datenpaket (16) gesendet wird, wenn das erste Frequenzband frei ist.

## Claims

1. A radio beacon with at least one first transceiver (4) for radio communication (13) with first onboard units (7) in compliance with 5.8 GHz DSRC standards, according to which the first transceiver (4) transmits a sequence of first data packets (15) in a first frequency band, and with at least one second transceiver (5) for radio communication (14) with second onboard units (8) in compliance with 5.9 GHz DSRC standards, according to which the second transceiver (5) transmits or receives at least one second data packet (16) in a second frequency band, **characterized by** the fact that the radio beacon (2) is designed for delaying the transmission of a data packet (15) of the sequence of first data packets (15) by the maximum duration (Tₚ) of a second data packet (16) if a second data packet (16) appears in the second frequency band.

2. The radio beacon according to Claim 1, **characterized by** the fact that the time interval (T_{c}) between two data packets (15) of the first sequence is about 10 - 30 ms and the aforementioned duration (Tₚ) of a second data packet (16) is no longer than 2 ms.

3. The radio beacon according to Claim 1 or 2, **characterized by** the fact that the first transceiver (4) monitors the second frequency band in order to cause the aforementioned delay (At) in the transmission of a first data packet (15) if it detects a second data packet (16) in the second frequency band.

4. The radio beacon according to Claim 1 or 2, **characterized by** the fact that the second transceiver (5) controls the first transceiver (4) in order to cause the aforementioned delay (At) in the transmission of a first data packet (15) if it transmits or receives a second data packet (16).

5. The radio beacon according to one of Claims 1-4, **characterized by** the fact that the second transceiver (5) monitors the first frequency band and only transmits a second data packet (16) if the first frequency band is clear.

6. The radio beacon according to one of Claims 1-4, **characterized by** the fact that the first transceiver (4) prevents the second transceiver (5) from transmitting a second data packet (16) if it transmits or receives a first data packet (15).

7. The radio beacon according to one of Claims 1-6, **characterized by** the fact that the first transceiver (4) features an antenna with directional characteristic.

8. A method for selective radio communication between a radio beacon (2) and first onboard units (7) in compliance with 5.8 GHz DSRC standards, according to which a sequence of first data packets (15) is transmitted by the radio beacon (2) in a first frequency band, and between the same radio beacon (2) and second onboard units (8) in compliance with 5.9 GHz DSRC standards, according to which at least one second data packet (16) is transmitted or received by the radio beacon (2) in a second frequency band, **characterized by** the fact that the transmission of a data packet (15) of the sequence of first data packets (15) is delayed by the maximum duration (Tₚ) of a second data packet (16) if a second data packet (16) appears in the second frequency band.

9. The method according to Claim 8, **characterized by** the fact that the time interval (T_{c}) between two data packets (15) of the first sequence is about 10-30 ms and the aforementioned duration (Tₚ) of a second data packet (16) is no longer than 2 ms.

10. The method according to Claim 8 or 9, **characterized by** the fact that a second data packet (16) is only transmitted if the first frequency band is clear.

## Revendications

1. Radiobalise avec au moins un premier émetteur-récepteur (4) pour la communication radio (13) avec des premiers appareils de véhicule (7) selon des normes DSRC à 5,8 GHz, selon lesquelles le premier émetteur-récepteur (4) envoie une série de premiers paquets de données (15) dans une première bande de fréquence, et avec au moins un deuxième émetteur-récepteur (5) pour la communication radio (14) avec des deuxièmes appareils de véhicule (8) selon des normes DSRC à 5,9 GHz, selon lesquelles le deuxième émetteur-récepteur (5) envoie ou reçoit au moins un deuxième paquet de données (16) dans une deuxième bande de fréquence, **caractérisée en ce que** la radiobalise (2) est conçue pour retarder l'envoi d'un paquet de données (15) de la série de premiers paquets de données (15) d'une durée maximale (Tₚ) d'un deuxième paquets de données (16), lorsqu'un deuxième paquet de données (16) apparaît dans la deuxième bande de fréquence.

2. Radiobalise selon la revendication 1, **caractérisée en ce que** l'intervalle de temps (T_{c}) entre deux paquets de données (15) de la première série est d'environ 10 à 30 ms, et ladite durée (Tₚ) d'un deuxième paquet de données (16) est au maximum de 2 ms.

3. Radiobalise selon la revendication 1 ou 2, **caractérisée en ce que** le premier émetteur-récepteur (4) surveille la deuxième bande de fréquence, afin de provoquer ledit retard (Δt) de l'envoi d'un premier paquet de données (15), lorsqu'il détecte un deuxième paquet de données (16) dans la deuxième bande de fréquence.

4. Radiobalise selon la revendication 1 ou 2, **caractérisée en ce que** le deuxième émetteur-récepteur (5) commande le premier émetteur-récepteur (4), afin de produire ledit retard (Δt) de l'envoi du premier paquet de données (15), lorsqu'il envoie ou reçoit un deuxième paquet de données (16).

5. Radiobalise selon l'une des revendications 1 à 4, **caractérisée en ce que** le deuxième émetteur-récepteur (5) surveille la première bande de fréquence et n'envoie un deuxième paquet de données (16) que si la première bande de fréquence est libre.

6. Radiobalise selon l'une des revendications 1 à 4, **caractérisée en ce que** le premier émetteur-récepteur (4) empêche le deuxième émetteur-récepteur (5) d'envoyer un deuxième paquet de données (16) lorsqu'il envoie ou reçoit un premier paquet de données (15).

7. Radiobalise selon l'une des revendications 1 à 6, **caractérisée en ce que** le premier émetteur-récepteur (4) possède une antenne avec une caractéristique de directivité.

8. Procédé pour la communication sélective entre une radiobalise (2) et des premiers appareils de véhicule (7) selon des normes DSRC à 5,8 GHz, selon lesquelles une série de premiers paquets de données (15) est envoyée par la radiobalise (2) dans une première bande de fréquence, et entre ladite radiobalise (2) et des deuxièmes appareils de véhicule (8) selon des normes DSRC à 5,9 GHz, selon lesquelles au moins un deuxième paquet de données (16) est envoyé ou reçu par la radiobalise (2) dans une deuxième bande de fréquence, **caractérisée en ce que** l'envoi d'un paquet de données (15) de la série de premiers paquets de données (15) est retardé d'une durée maximale (Tₚ) d'un deuxième paquets de données (16), lorsqu'un deuxième paquet de données (16) apparaît dans la deuxième bande de fréquence.

9. Procédé selon la revendication 8, **caractérisé en ce que** l'intervalle de temps (T_{c}) entre deux paquets de données (15) de la première série est d'environ 10 à 30 ms, et ladite durée (Tₚ) d'un deuxième paquet de données (16) est au maximum de 2 ms.

10. Procédé selon la revendication 8 ou 9, **caractérisé en ce qu'**un deuxième paquet de données (16) n'est envoyé que si la première bande de fréquence est libre.
